# EUROPEAN PATENT APPLICATION

(11) **EP 2 299 564 A1**
(43) Date of publication of application: **23.03.2011**
(21) Application number: 09758065.8
(22) Date of filing: 26.05.2009
(51) Int. Cl.: H02K 9/19, H02K 1/32

(54) **COOLING STRUCTURE OF MOTOR**

(30) Priority: 02.06.2008 JP 2008144134
(71) Applicant: NTN Corporation, Osaka-shi, Osaka 550-0003 (JP)
(72) Inventor: OKADA, Koichi, Iwata-shi Shizuoka 438-0037 (JP); MAKINO, Yusuke, Iwata-shi Shizuoka 438-0037 (JP); SUGIURA, Ken, Iwata-shi Shizuoka 438-0037 (JP)
(74) Representative: Hirsch & Associés
(86) International application number: PCT/JP2009/002307
(87) International publication number: WO 2009/147798

(57) **Abstract**

An internal cooling structure for a motor, which is effective to remove the heat in the rotor to achieve high cooling effect is provided. The motor includes a stator having a stator coil and a stator core, and a rotor positioned on an inner side of the stator core. The rotor includes a tubular rotor spindle on a rotor drive shaft, and the rotor core is fitted to the rotor spindle. A cooling space is defined between the rotor drive shaft and the rotor spindle. An inner peripheral surface of the rotor spindle confronting the cooling space has tapered shape having large diameter at an end portion. An oil feed passage for a cooling oil is defined inside the rotor drive shaft, and a cooling oil discharge port of such oil feed passage is formed in the rotor drive shaft confronting the cooling space.

## Description

### CROSS REFERENCE TO THE RELATED APPLICATION

This application is based on and claims Convention priority to Japanese patent application No. 2008-144134, filed June 2, 2008, the entire disclosure of which is herein incorporated by reference as a part of this application.

### BACKGROUND OF THE INVENTION

### (Field of the Invention)

The present invention relates to a cooling structure employed within a motor of a kind, in which a rotor is disposed on an inner side of a stator core.

### (Description of the Related Art)

For an internal cooling system employed in a motor of a kind including a stator having a stator coil and a stator core arranged or formed in an annular shape, and a rotor positioned on an inner peripheral side of the stator core for rotation relative to the stator, the Patent Document 1 listed below, for example, discloses the use of a hollow shaft for a rotor drive shaft, the hollow of the rotor drive shaft being communicated with an outer peripheral side through perforations through which a cooling oil can be fed under pressure from the outside into the hollow so that the cooling oil within the hollow can be scattered towards the outer peripheral side through those perforations under the influence of a centrifugal force, developed as a result of rotation of the rotor drive shaft, to thereby cool the stator coil.
[Patent Document 1] JP Laid-open Patent Publication No. H09-154258

### SUMMARY OF THE INVENTION

According to the related internal cooling system of a type referred to above, when the cooling oil scattered towards the outer peripheral side through the perforations impinge upon the stator coil, heat evolved in the stator coil can be efficiently removed therefrom. However, removal of the heat evolved in the rotor is limited because no cooling oil so scattered impinge upon the rotor.

An object of the present invention is to provide an internal cooling structure for a motor, which is effective to efficiently remove the heat, evolved particularly in the rotor, to thereby achieve a high cooling effect inside the motor.

The cooling structure designed in accordance with the present invention is for a motor of a type including a stator having a stator coil and a stator core arranged or formed in an annular shape, and a rotor positioned on an inner peripheral side of the stator core and rotatable relative to the stator, the rotor having a rotor drive shaft, positioned at a center, a tubular rotor spindle provided on an outer periphery of the rotor drive shaft and a rotor core fitted to an outer periphery of a rotor spindle, in which an outer peripheral surface of the rotor drive shaft and an inner peripheral surface of the rotor spindle cooperatively define a cooling space therebetween having an end portion opening. The rotor spindle has a tapered inner peripheral surface so as to have a larger diameter at the end portion; the rotor drive shaft has an oil feed passage for a cooling oil defined therein; and a cooling oil discharge port of such oil feed passage is defined in a portion of the outer peripheral surface of the rotor drive shaft confronting the cooling space.

According to the above construction, the cooling oil supplied from the outside is discharged from the cooling oil discharge port open at the outer peripheral surface of the rotor drive shaft, into the cooling space after having flowed through the oil feed passage within the rotor drive shaft. The cooling oil so discharged impinges upon the tapered inner peripheral surface of the rotor spindle and, then, under the influence of a centrifugal force developed as a result of rotation of the rotor spindle, moves towards a large diametric side in the form as scattered over the entire region of the tapered inner peripheral surface. At this time, heat evolved in the rotor can be efficiently removed.

In one embodiment of the present invention, a hamper portion for hampering a smooth flow of the cooling oil flowing along the inner peripheral surface of the rotor spindle may preferably be provided within the cooling space.

The use of the hamper portion is effective to increase an effect of removing the heat evolved in the rotor, since the cooling oil can be guided over the entire inner peripheral surface of the rotor spindle.

In one embodiment of the present invention, a cooling oil discharge port of the oil feed passage may be formed at a plurality of axial locations on an outer peripheral surface of the rotor drive shaft.

If the cooling oil discharge port is formed at a plurality of axial locations, the cooling oil can be uniformly diffused in an axial direction along the tapered inner peripheral surface of the rotor spindle and, therefore, the rotor can be cooled uniformly in the axial direction.

In one embodiment of the present invention, the cooling structure may further include a stator housing for accommodating therein the stator coil and the stator core, the stator housing including an oil discharge passage for discharging the cooling oil therefrom and an oil guide ring for guiding the cooling oil flowing radially outwardly along an end face of the rotor spindle or the rotor core, towards the oil discharge passage, provided in a side wall portion of the stator housing confronting the end face of the rotor spindle or the rotor core and in proximity to such end face of the rotor spindle or the rotor core.

By providing the oil guide ring, the cooling oil, flowing in the outer diametric side along the end face of the rotor spindle or the rotor core, can be guided towards the oil discharge passage and, therefore, flow of cooling into the gap portion delimited between the rotor and the stator may be avoided. Accordingly, the motor loss, which would result from the stirring resistance of the cooling oil accumulated within the gap portion, can be prevented from occurring.

Also, in one embodiment of the present invention, the cooling structure may further include a stator housing for accommodating therein the stator coil and the stator core, wherein a gap for enabling the cooling oil flowing from an end portion of the cooling space towards an outer diametric side, to reach the stator coil is provided between a side wall portion of the stator housing, confronting respective end faces of the rotor spindle and the rotor core, and the respective end faces of the rotor spindle and the rotor core. In such case, the stator coil referred to above may be preferably of a non-molded structure, in which the cooling oil contacts a coil winding directly.

By providing the gap referred to above, the cooling oil flowing from the end portion of the cooling space towards the outer diametric side can reach the stator coil and, therefore, the stator coil can be cooled by this cooling oil. In particular if the stator coil is of a non-molded structure, the cooling oil can contact the coil winding directly and, therefore, the cooling effect can increase.

Furthermore, in one embodiment of the present invention, the cooling structure may further include a stator housing for accommodating therein the stator coil and the stator core, the stator housing including an oil guide ring for guiding the cooling oil flowing from an end portion of the cooling space towards an outer diametric side, so as to fall on the rotor spindle or the rotor core is provided in a side wall portion of the stator housing confronting respective end faces of the rotor spindle and the rotor core.

By providing the oil guide ring, the cooling oil flowing from the end portion of the cooling space towards the outer diametric side can be guided so as to reach the rotor spindle or the rotor core and, therefore, the rotor spindle or the rotor core can be cooled by this cooling oil. Therefore, as compared with the case, in which the cooling is effected with the cooling oil from only the inner peripheral surface of the rotor spindle, the heat evolved in the rotor can be removed further efficiently.

The cooling structure of any of the types referred to above can be adopted in a variety of motors. The motor, in which the cooling structure of the present invention is adopted, is excellent in that the interior of such motor is cooled.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a sectional view showing a motor to which a cooling structure according to a first embodiment of the present invention is applied;
Fig. 2 is a sectional view showing a motor to which a cooling structure according to a second embodiment of the present invention is applied; and
Fig. 3 is a sectional view showing an important portion of the motor which is a modified form of the present invention.

### DETAILED DESCRIPTION OF THE EMBODIMENTS

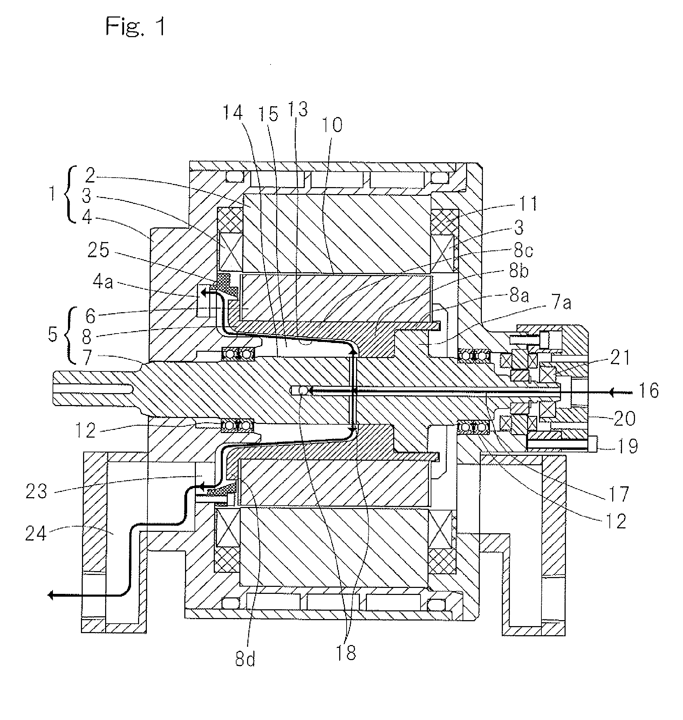

A first embodiment of the present invention will be described in detail with particular reference to Fig. 1. The motor, to which this cooling structure is applied, is made up of a stator 1 and a rotor 5 and is a motor of a radial gap type, in which a radially spaced gap portion 10 is provided intermediate between a stator core 2 of the stator 1 and a rotor core 6 of the rotor 5.

The stator 1 includes the stator core 2 referred to above and having an annular shape, a stator coil 3 arranged on opposite axial sides of the stator core 2, and a stator housing 4 accommodating the stator core 2 and the stator coil 3. The stator core 2 is specifically of a type, in which a stator coil is wound around each of a plurality of cores arranged in an annular configuration, and is fixed to an inner peripheral surface of the stator housing 4. A space delimited by and among the stator core 2 and the stator coil 3 and the stator housing 4 is molded by a molding material 11.

The rotor 5 is of a type arranged on an inner peripheral side of the stator core 2 and includes the rotor core 6 of an annular configuration in the form of a permanent magnet, a rotor drive shaft 7 positioned at a center of the rotor 5, and a tubular rotor spindle 8 interposed between the rotor core 6 and the rotor drive shaft 7 to couple the rotor core 6 and the rotor drive shaft 7 so as to rotate together. The rotor drive shaft 7 is supported by bearings 12 for rotation relative to the stator housing 4. The rotor drive shaft 7 and the rotor spindle 8 are fixed to each other by means of, for example, press-fitting and, similarly, the rotor spindle 8 and the rotor core 6 are fixed to each other by means of press-fitting.

The rotor drive shaft 7 has a large diameter portion 7a defined at an axially intermediate portion thereof, and a right end portion 8a and an intermediate portion 8b of the rotor spindle 8 are held in contact with an outer periphery of the large diameter portion 7a of the rotor drive shaft 7 and a portion of an outer periphery of the rotor drive shaft 7 that lies axially leftwards of the large diameter portion 7a, respectively. A non-contact portion 8c of the rotor spindle 8, which is not held in contact with the rotor drive shaft 7 has an inner peripheral surface 13 tapered outwardly towards an end portion side (leftwards as viewed in the drawing in the illustrated embodiment) to represent a large diameter. A cooling space 15 is defined between the tapered inner peripheral surface 13 and an outer peripheral surface 14 of the rotor drive shaft 7. The cooling space 15 referred to above has its end portion opening outwardly. A further tip side of the rotor spindle non-contact portion 8c is rendered to be a collar portion 8d lying along an end face of the rotor core 6.

For the purpose of cooling the inside of the motor, an oil feed passage 17 is provided within the rotor drive shaft 7 for the flow of a cooling oil 16 therethrough. This oil feed passage 17 have cooling oil discharge ports 18 which are formed in the outer peripheral surface 14 of the rotor drive shaft 7 confronting the cooling space 15. In the case of the illustrated embodiment, two axial portions of the outer peripheral surface 14 of the rotor drive shaft 7 are formed each with two cooling oil discharge ports 18. The cooling oil discharge ports 18 at the two portions in the same axial position are arranged at respective positions spaced 180° in phase from each other. Also, the cooling oil discharge ports 18 at the two portions in the different axial positions are held in respective phases different from each other. It is, however, to be noted that the cooling oil discharge port 18 may be formed at three or more axial locations on the outer peripheral surface of the rotor drive shaft 7.

The cooling oil 16 is fed under pressure from the outside into the oil feed passage 17. An oil supply tube (not shown), through which the cooling oil 16 is supplied under pressure, is fluid coupled with a cap 20 fixed to the stator housing 4 by means of a bolt 19. An oil seal 21 for sealing the interior of the motor from the outside is interposed between the cap 20 and the rotor drive shaft 7.

An open end of the cooling space 15 is fluidly connected with an oil discharge passage 23 for discharging the cooling oil 16 to the outside. The oil discharge passage 23 extends axially outwardly from the collar portion 8d of the rotor spindle 8 towards an annular groove 4a defined in the stator housing 4 and then towards the outside of the motor by way of an oil tank 24. A side wall portion of the stator housing 4, which confronts an end face of the rotor core 6, is provided with an oil guide ring 25 having its tip held in proximity to the end face of the rotor core 6. This oil guide ring 26 is operable to guide the cooling oil 16 flowing radially outwardly along the end face of the rotor core 6, towards the oil discharge passage 23 to thereby avoid an undesirable flow of the cooling oil 16 into the gap portion 10 delimited between the stator core 2 and the rotor core 6.

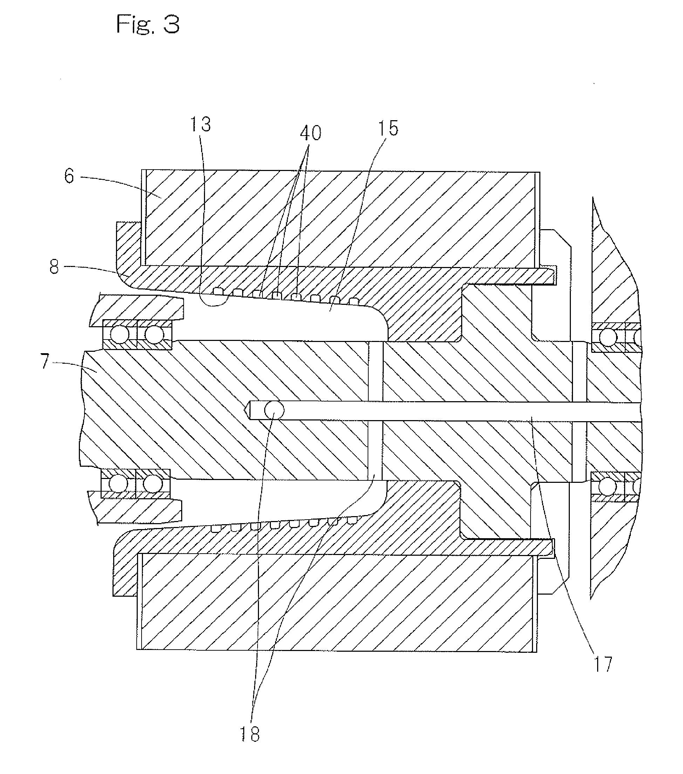

As shown in Fig. 3, by providing a hamper portion 40 in the form of grooves of, for example, an annular shape is provided in the tapered inner peripheral surface 13 of the rotor spindle 8, the smooth flow of the cooling oil 16 can be hampered so that the cooling coil 16 can be conducted towards the entire surface of the tapered inner peripheral surface 13. By so doing, an effect to remove the heat evolved in the rotor 5 can be increased. For the hamper portion 40, the grooves may be superseded with a weir or weirs that protrude from the tapered inner peripheral surface 13 into the cooling space 15.

According to the foregoing cooling structure for the motor, the cooling oil 16 supplied from the outside can be discharged from the cooling oil discharge ports 18, open at the outer peripheral surface of the rotor drive shaft 7, into the cooling space 15 after having flowed through the oil feed passage 17 defined inside the rotor drive shaft 7. The cooling oil 16 so discharged subsequently impinges upon the tapered inner peripheral surface 13 and, then, flows towards a large diametric side in the form as scattered over the entire surface of the tapered inner peripheral surface 13 under the influence of a centrifugal force developed as a result of rotation of the rotor spindle 8. At this time, the heat evolved in the rotor 5 is efficiently removed.

The cooling oil 16, which has flowed towards one of opposite ends of the tapered inner peripheral surface 13, which is adjacent to the large diametric side thereof, is pooled within the oil tank 24 after having flowed through the oil discharge passage 23, and an excessive fraction of the cooling oil 16 within the oil tank 24 is discharged to the outside of the motor. Since the oil guide ring 25 is provided, the cooling oil 16 does not flow into the gap portion 10 delimited between the stator core 2 and the rotor core 6 and, therefore, motor loss may be avoided, which would otherwise results from the stirring resistance of the cooling oil 16 accumulated within the gap portion 10.

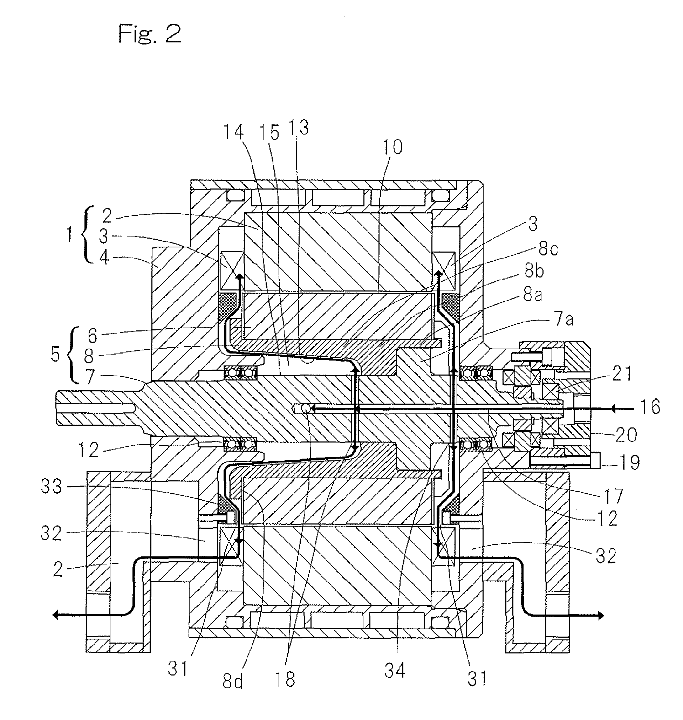

Fig. 2 illustrates a second embodiment of the present invention. While the cooling structure according to the previously described first embodiment has been designed with emphasis placed not only on the efficient removal of the heat evolved in the rotor 5, but also on avoidance of the motor loss resulting from the stirring resistance of the cooling oil 16 accumulated within the gap portion 10, the cooling structure according to this second embodiment is designed with emphasis placed on the cooling effect on the stator coil 2. More specifically, a gap 31 is defined between an inner side wall portion of the stator housing 4 and the respective end faces of the rotor spindle 8 and the rotor core 6 so as to form an oil discharge passage 32 through which the cooling oil 16 then flowing from an end portion of the cooling space 15 in a radially outward direction can flow into the oil tank 24 through the stator coil 3. The stator coil 3 is of a non-molded structure, in which the cooling oil 16 may contact the coil winding directly. In other words, the stator coil 3 is of a type not molded, and with the coil winding exposed. Also, an oil guide ring 33 for guiding the cooling oil 16 flowing through the gap 31, to fall onto the rotor core 6, is provided in the inner side wall portion of the stator housing 4.

The oil discharge passage 32 referred to above are defined on respective left and right sides of the stator core 2, the rotor core 6 and the rotor spindle 8. Accordingly, unlike that in the previously described first embodiment, a cooling oil discharge port 34, from which the cooling oil 16 within the oil feed passage 17 can be discharged into the oil discharge passage 32 on the right side, is provided in the outer peripheral surface of the rotor drive shaft 7.

Even with the cooling structure according to the second embodiment of the present invention, in a manner similar to that exhibited by the cooling structure according to the first embodiment, the cooling oil 16 can be discharged from the cooling oil discharge ports 18 into the cooling space 15 and the heat evolved in the rotor 5 can be efficiently removed while the cooling oil 16 discharged into the cooling space 15 flows along the tapered inner peripheral surface 13 and the end face of the rotor spindle 8. In addition, since in the case of this second embodiment, the cooling liquid 16 flowing through the gap 31 is guided by the oil guide ring 33 so as to fall on the rotor core 6, the rotor core 6 can be cooled directly and the heat evolved in the rotor 5 can be removed further efficiently. Moreover, since the cooling oil 16 flows in contact with the coil winding of the stator coil 3, which is of the non-molded structure, heat evolved in the stator coil 3 can also be removed. In view of those, the cooling structure according to this embodiment may have a high effect of cooling the inside of the motor.

It is, however, to be noted that since the cooling oil 16 flows into the gap portion 10 delimited between the stator core 2 and the rotor core 6, the motor loss, which would result from the stirring resistance of the cooling oil 16 accumulated within the gap portion 10, cannot be avoided.

Although the motor, to which the cooling structure according to any one of the foregoing embodiments of the present invention has been adopted, has an excellent effect of cooling the interior of the motor, the respective motors designed according to those embodiments have their own advantages. Accordingly, depending on the specification and the application of the motor, one of the cooling structures according to the associated embodiments has to be selected.

Although the present invention has been fully described in connection with the embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

Reference Numerals
- 1:: Stator
- 2:: Stator core
- 3:: Stator coil
- 4.: Stator housing
- 5:: Rotor
- 6:: Rotor core
- 7:: Rotor drive shaft
- 8:: Rotor spindle
- 10:: Gap portion
- 11:: Molding material
- 13:: Inner peripheral surface of the rotor spindle
- 14:: Outer peripheral surface of the rotor drive shaft
- 15:: Cooling space
- 16:: Cooling oil
- 17:: Oil feed passage
- 18, 34:: Cooling oil discharge port
- 23, 32:: Oil discharge passage
- 25, 33:: Oil guide ring
- 31:: Gap
- 40:: Inhibitor

## Claims

1. A cooling structure of a motor, which motor comprises a stator having a stator coil and a stator core arranged or formed in an annular shape, and a rotor positioned on an inner peripheral side of the stator core and rotatable relative to the stator, the rotor having a rotor drive shaft, positioned at a center, a tubular rotor spindle provided on an outer periphery of the rotor drive shaft and a rotor core fitted to an outer periphery of a rotor spindle,
wherein an outer peripheral surface of the rotor drive shaft and an inner peripheral surface of the rotor spindle cooperatively define a cooling space therebetween having an end portion opening,
the rotor spindle having a tapered inner peripheral surface so as to have a larger diameter at the end portion, and
the rotor drive shaft having an oil feed passage for a cooling oil defined therein, a cooling oil discharge port of such oil feed passage being defined in a portion of the outer peripheral surface of the rotor drive shaft confronting the cooling space.

2. The cooling structure for the motor as claimed in claim 1, further comprising a hamper portion provided within the cooling space for hampering a smooth flow of the cooling oil flowing along the inner peripheral surface of the rotor spindle.

3. The cooling structure for the motor as claimed in claim 1, wherein the rotor drive shaft is formed with a plurality of the cooling oil discharge port of the oil feed passage on an outer peripheral surface thereof.

4. The cooling structure for the motor as claimed in claim 1, further comprising a stator housing for accommodating therein the stator coil and the stator core, the stator housing including an oil discharge passage for discharging the cooling oil therefrom and an oil guide ring for guiding the cooling oil flowing radially outwardly along an end face of the rotor spindle or the rotor core, towards the oil discharge passage, provided in a side wall portion of the stator housing confronting the end face of the rotor spindle or the rotor core and in proximity to such end face of the rotor spindle or the rotor core.

5. The cooling structure for the motor as claimed in claim 1, further comprising a stator housing for accommodating therein the stator coil and the stator core, wherein a gap for enabling the cooling oil flowing from an end portion of the cooling space towards an outer diametric side, to reach the stator coil is provided between a side wall portion of the stator housing, confronting respective end faces of the rotor spindle and the rotor core, and the respective end faces of the rotor spindle and the rotor core.

6. The cooling structure for the motor as claimed in claim 5, wherein the stator coil is of a non-molded structure in which the cooling oil contacts a coil winding directly.

7. The cooling structure for the motor as claimed in claim 1, further comprising a stator housing for accommodating therein the stator coil and the stator core, the stator housing including an oil guide ring for guiding the cooling oil flowing from an end portion of the cooling space towards an outer diametric side, so as to fall on the rotor spindle or the rotor core is provided in a side wall portion of the stator housing confronting respective end faces of the rotor spindle and the rotor core.

8. A motor having a cooling structure as defined in claim 1.
